(19) Europäisches Patentamt
European Patent Office
Office européen des brevets

(11) **EP 3 007 145 B1**

(12) **EUROPEAN PATENT SPECIFICATION**

(45) Date of publication and mention
of the grant of the patent:
**14.08.2019 Bulletin 2019/33**

(51) Int Cl.:
*G08B 13/24* *(2006.01)*     *G08B 29/18* *(2006.01)*
*G01S 13/56* *(2006.01)*     *G01S 7/285* *(2006.01)*
*G01S 13/04* *(2006.01)*     *G01S 7/28* *(2006.01)*

(21) Application number: **15188431.9**

(22) Date of filing: **05.10.2015**

(54) **INTRUSION DETECTOR AND METHOD FOR IMPROVED SENSITIVITY**

EINBRUCHDETEKTOR UND VERFAHREN FÜR VERBESSERTE EMPFINDLICHKEIT

DÉTECTEUR D'INTRUSION ET PROCÉDÉ POUR UNE SENSIBILITÉ AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2014 US 201414510394**

(43) Date of publication of application:
**13.04.2016 Bulletin 2016/15**

(73) Proprietor: **Honeywell International Inc.
Morris Plains, NJ 07950 (US)**

(72) Inventor: **DING, David
Morris Plains, NJ New Jersey 07950 (US)**

(74) Representative: **Houghton, Mark Phillip
Patent Outsourcing Limited
1 King Street
Bakewell, Derbyshire DE45 1DZ (GB)**

(56) References cited:
**EP-A2- 1 826 732**     **CN-A- 103 684 464**
**GB-A- 2 081 545**     **GB-A- 2 401 500**

**Description**

FIELD

The application pertains to intrusion detectors used in monitoring regions of interest. More particularly, the application pertains to such detectors and associated methods which provide improved signal-to-noise ratios and enlarge the detection area in a region of interest without increased power consumption.

BACKGROUND

Motion detectors incorporating microwave technology are widely used in the field of security. There are two modules in this type of detector. One is a microwave detection module which radiates microwaves into a monitored area of space and receives reflected waves. If there are moving objects, the frequency of the reflected microwave is different from the radiated microwave. By mixing the received and radiated microwaves, we can get the difference frequency (also called intermediate frequency, IF). The other module is the IF signal processing module which will amplify, digitize and extract the IF signal.

If there is a person walking in the monitored area, then the detection module detects the frequency difference between transmitted and received microwaves, and outputs the corresponding IF frequency. The IF signals are amplified, sampled, and processed by hardware circuit and algorithms of the IF processing module to determine whether there has been an intrusion. A corresponding control output can then be generated.

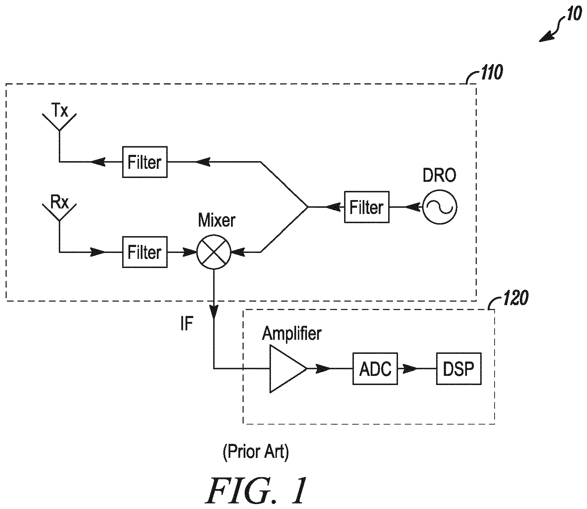

Typically, a prior art motion detector using microwave technology, illustrated in Fig. 1, includes a microwave sensor module 110, and an IF signal processing module 120. As illustrated in the diagram of Fig. 1, the sensor module 110 outputs an electrical IF signal by sensing the motion of a human body. Then, the IF signal is processed by the IF module 120. That signal is then identified by processing in the Digital Signal Processor (DSP). A corresponding control output signal can then be generated.

The circuit of Fig. 1 exhibits several problems. IF processing module 120 adds noise to the IF signal outputted by the microwave sensor module 110. Hence, it is very easy to miss alarms for weak signals, such as these signals generated by long range targets, or having a low scattering cross section area. Additionally, if the sensor module is battery-powered, the radiated microwave power can only have limited signal strength. Therefore, detector sensitivity is a problem at times.

Patent document number GB2081545A describes a microwave proximity detector system which has a microwave noise source that supplies signals to a transmitting aerial and to a delay unit. Microwave energy reflected off external objects is received by a second aerial which supplies signals directly to a correlator. The correlator also receives signals from the delay unit and produces output signals that are dependent on the degree of correlation between the two input signals and the amplitude of the received energy. This gives a response that decreases sharply beyond a predetermined distance, dependent on the delay introduced by the unit.

Patent document number GB2401500A describes a microwave sensor that transmits a plurality of microwaves having different frequencies to a detection area and performs an object detecting operation based on microwaves reflected off an object present in the detection area. An object determining means determines whether or not the object present in the detection area is an object to be detected, based on the moving direction of the object in the detection area. The object determining means may further determine if the object present in the detection area is an object to be detected based on: movements of the object above a predetermined amount that are simultaneously detected in at least two different directions; movement of the object in a single direction within the detection area; and the movement amount of the object in the detection area wherein the movement amount is not more than a second predetermined value. The disclosed microwave sensor is suitable for intruder detection and may be configured to distinguish intruders to be detected from external noise caused by plants, fluorescent lamps and movement of objects above a predetermined speed.

Patent document number CN103684464A describes an under-sampling and processing method for intermediate-frequency signals of autocorrelation microwave radiometers. The under-sampling and processing method includes steps of receiving polarization signals of the autocorrelation microwave radiometers; performing IQ transformation; performing AD (analog/digital) acquisition; performing redundancy correlation. The under-sampling and processing method particularly includes that the polarization signals of the autocorrelation microwave radiometers are received. In other words, radiofrequency signals received by antennas are fed through orthogonal-mode couplers and then are divided into V and H polarization signals. the V and H polarization signals are subjected to low-noise amplification, filter, frequency mixing, filter and amplification, and then the intermediate-frequency signals are outputted. The received intermediate-frequency signals are divided into 0-degree intermediate-frequency signals and 90-degree intermediate-frequency signals by 90-degree power dividers and are orthogonal with one another. The 0-degree intermediate-frequency signals and the 90-degree intermediate-frequency signals are subjected to AD acquisition and are digitally sampled at sampling rates larger than two times bandwidths of the received signals. The redundancy correlation is carried out by means of average calculating operation on two groups of redundancy correlation operation results, and multi-correlation results can be finally acquired.

Patent document number EP1826732A describes a motion detector comprising a module to detect movement, intermediate processing circuitry and cross-correlation circuitry.

The present invention in its various aspects is as set out in the appended claims.

BRIEF DESCRIPTION OF THE DRAWINGS

Fig. 1 illustrates a block diagram of a prior art system;
Fig. 2 is a block diagram of an embodiment hereof; and
Fig. 3 is a schematic of an exemplary amplifier circuit.

DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

In one aspect, embodiments hereof relate to the surveillance systems for detecting an intruder in a monitored area of space. More particularly embodiments disclose improvements for the signal processing method for intrusion sensors. More specifically a method for the intermediate signal amplifying processing is disclosed. Advantageously, this method can effectively improve the signal-to-noise ratio of microwave-type detection systems, and enlarge the detection area without increasing the power consumption for the microwave unit.

Disclosed embodiments incorporate cross-correlation methods to process an IF signal from a microwave-type intrusion sensor. This processing will produce motion indicating signals with substantially reduced noise compared to that generated by the sensor and subsequent amplifiers of the IF processing module.

In another aspect, the IF signal generated by microwave intrusion sensor is split at a node into two signals. The two signals are separately and identically processed. Each of the signals is amplified and then sampled. This produces, two digital time sequences, S1(n) and S2(n). Cross-correlation processing of the signals can be carried out using a digital signal processor (DSP).

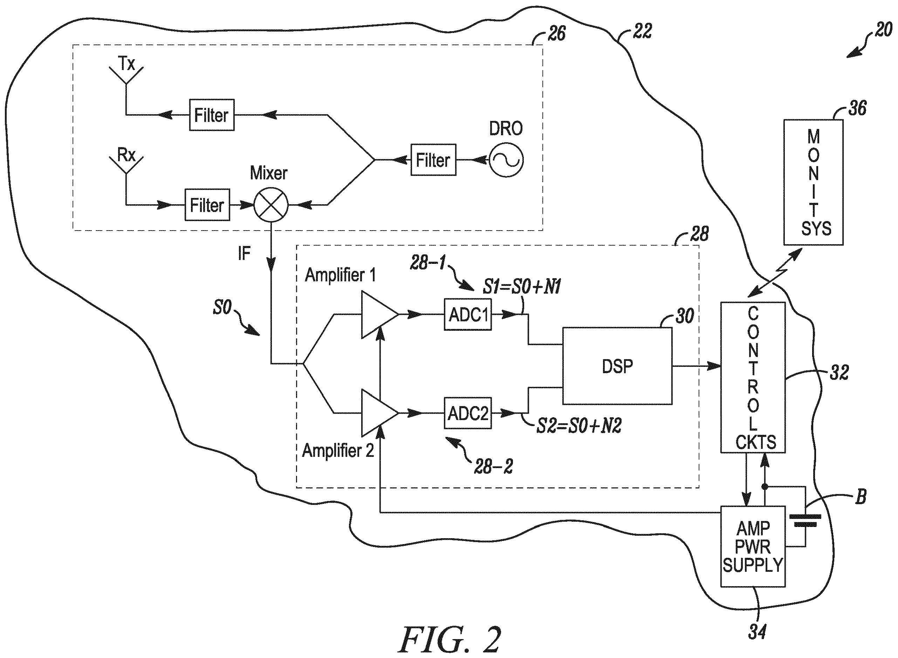

Fig. 2 illustrates a detector 20 in accordance herewith. Detector 20 is carried in a housing 22. The detector 20 includes a microwave-type intrusion sensor, module 26, which generates an output IF signal, labeled S0 in Fig. 2.

The signal S0 is in turn coupled to IF processing module 28. Module 28 includes first and second, substantially identical, amplifier/analog-to-digital converter strings 28-1 and 28-2. It will be understood that the use of two strings is exemplary only. Three or more strings could be used without departing from the spirit and scope hereof.

The two strings 28-1, 28-2 are coupled to DSP 30. Outputs from DSP 30 can be coupled to control circuits 32. It will be understood that the DSP 30 could be incorporated into and made a part of control circuits 32 without departing from the spirit and scope hereof.

Control circuits 32 can be implemented with hardwired circuits along with one or more programmed processors, and associated control software. The DSP 30 can be implemented, if desired, as a hardwired unit.

The control circuits 32 are coupled to an amplifier power supply 34, which can be energized by a battery B which also energizes other circuits of the detector 20. The control circuits 32 can be in wired or wireless communication with a displaced monitoring system 36. Detector 20 can be one of a plurality of such detectors which communicate with monitoring system 36.

There are at least two approaches to improve the sensitivity of microwave-type motion detectors. One way is to place a low noise amplifier (LNA) between receiving antenna and mixer, of the sensing module, such as module 26. Another way is to reduce the noise which will be added to the signal by subsequent processing circuits. Because the receiver antenna Rx is very close to the transmitter antenna Tx, their coupling is very strong. Hence, if a LNA is placed after the receiver antenna Rx, the LNA may be saturated. Therefore, the practical way to improve sensitivity is to reduce signal noise.

Sources of signal noise include circuit components, as well as the way in which various modules or components are operated. Surprisingly, despite the fact that the detector 20 incorporates two signal paths 28-1, -2, overall noise effects can be reduced in the embodiment 20. As illustrated in Fig. 2, N1 and N2 designate the noise generated by the first and second paths respectively. Due to the independence of the two paths, the two noise components are independent and stochastic. As a result of using cross-correlation processing, the two noise components N1, N2 can be cancelled out.

In further explanation, Let S1 and S2 be the output of the first and second paths respectively, their cross

correlation function is:

$$R_{S_1 S_2}(\tau) = \lim_{T \to \infty} \frac{1}{T} \int_0^T S_1(t) S_2(t-\tau)\, dt$$

$$= \lim_{T \to \infty} \frac{1}{T} \int_0^T [S_0(t) + N_1(t)][S_0(t-\tau) + N_2(t-\tau)]\, dt$$

$$= \lim_{T \to \infty} \frac{1}{T} \int_0^T [S_0(t)S_0(t-\tau) + S_0(t)N_2(t-\tau) + N_1(t)S_0(t-\tau) + N_1(t)N_2(t-\tau)]\, dt$$

$$= R_{S_0 S_0}(\tau) + R_{S_0 N_2}(\tau) + R_{N_1 S_0}(\tau) + R_{N_1 N_2}(\tau)$$

Where, N1 and N2 are zero-mean white Gaussian noises, in signal S0, N1 and N2 are uncorrelated with each other, so $R_{S_0 N_2}(\tau)$, $R_{N_1 S_0}(\tau)$ and $R_{N_1 N_2}(\tau)$ equal to zero.

In summary, in addition to reducing noise generated by the circuit components 28-1, -2, by applying the cross-correlation method to process IF signal as discussed above, the disclosed detectors will have an improved detecting sensitivity, which makes the sensor detection range/area larger. Further, by applying the cross-correlation to process IF signals, and for a given detection range/area, such detectors can be expected to have fewer false alarms. As a result of applying the cross-correlation method to process IF signals, for a given detection range/area, the detector needs less radiated power, and less power dissipation.

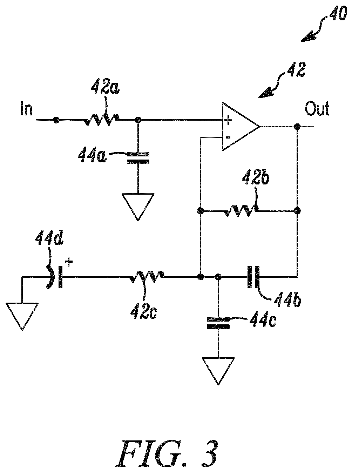

Fig. 3 illustrates an exemplary amplifier circuit 40 usable in detector 20. Amplifier 40 includes an operational amplifier 42, for example an LM324A, as well as a combination of resistors 42a, b, and c. Capacitors 44a, b, c, d complete the circuit 40.

Since sensors, such as sensor 26, operate based on a principle of Doppler shift, and due to slow moving objects, in the field of view, the Doppler frequency is very low, on the order of tens of Hertz. Hence implementing the circuit 42 with an operational amplifier is a desirable solution.

However the resistors of the amplifier 40 do in fact introduce additional noise into the signals of each of the strings 28-1, -2. Surprisingly, the noise introduced by the amplifiers into each of the uncorrelated paths 28-1, -2 can be canceled out by the above described cross-correlation processing carried out by DSP 30.

Using a controllable amplifier power supply, such as supply 34, to reduce power required by the detector 20, the amplifiers, such as amplifier 40, can be operated in a pulsed mode. In this mode, the amplifiers, such as amplifier 40 inject additional noise into each of the associated signals, such as S1, S2. The module 26 can also be operated intermittently for similar reasons.

The above described cross-correlation processing can be expected to cancel such amplifier generated noise.

From the foregoing, it will be observed that numerous variations and modifications may be effected without departing from the scope of the invention as defined in the claims. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1.  A motion detector (20) comprising:

    a module to detect movement (26);
    intermediate processing circuitry (28) coupled to an output of the module
    first amplifier/analog-to-digital converter circuit components (28-1) of the intermediate processing circuitry (28) that receive a module output signal from the output of the module and are activated intermittently to produce a first output signal,
    second amplifier/analog-to-digital converter circuit components (28-2) of the intermediate processing circuitry (28) that, simultaneous with the first amplifier/analog-to-digital converter circuit components (28-1), receive the module output signal and are activated intermittently to produce a second output signal, wherein the second amplifier/analog-to-digital converter circuit components (28-2) are substantially identical to the first amplifier/analog-to-digital converter circuit components (28-1); and

cross-correlation circuitry (30) to process the first and second output signals to produce a noise cancelled motion indicating output signal,
wherein the first amplifier/analog-to-digital converter circuit components (28-1) and the second amplifier/analog-to-digital converter circuit components (28-2) identically process the module output signal.

2. The detector as in claim 1 wherein the first amplifier/analog-to-digital converter circuit (28-1) components include a first operational amplifier (30) to amplify the module output signal, and wherein the second amplifier/analog-to-digital converter circuit components include a second operational amplifier (30) to amplify the module output signal.

3. The detector as in claim 1 wherein the cross-correlation circuitry includes a digital signal processor (30).

4. The detector as in claim 1 further comprising control circuits to command at least the intermediate processing circuits to operate in one of a first operational state and a second operational state.

5. The detector as in claim 4 wherein one of the first and second operational states comprises a no power state.

6. The detector as in claim 4 further comprising switchable power supply circuits.

7. The detector as in claim 1 further comprising a housing that carries the module, the intermediate processing circuitry, and the cross-correlation circuitry.

8. The detector as in claim 7 further comprising control circuits to switch at least the intermediate processing circuitry between first and second operational states, wherein one of the first and second operational states is a no power state.

9. The detector as in claim 8 further comprising transmission circuits coupled to the control circuits to communicate with a displaced location by one of a wired or wireless medium.

10. The detector as in claim 9 further comprising a battery coupled to at least the control circuits.

11. A method for detecting motion comprising:

generating an output signal indicative of motion by a module to detect movement (26);
receiving the output signal from the module by intermediate processing circuitry coupled (26, 28) to an output of the module;

first amplifier/analog-to-digital converter circuit (28-1) components of the intermediate processing circuitry (28) receiving the module output signal and intermittently activating to produce a first output signal;
second amplifier/analog-to-digital converter circuit components (28-2) of the intermediate processing circuitry (28), simultaneously with the first amplifier/analog-to-digital converter circuit components (28-1), receiving the module output signal and intermittently activating to produce a second output signal, wherein the second amplifier/analog-to-digital converter circuit components (28-2) are substantially identical to the first amplifier/analog-to-digital converter circuit components, and wherein the first amplifier/analog-to-digital converter circuit components (28-1) and the second amplifier/analog-to-digital converter circuit components (28-2) identically process the module output signal;
processing the first output signal and the second output signal with cross-correlation circuitry (30) to produce a noise cancelled output signal; and determining a presence of the motion based on the noise cancelled output signal.

**Patentansprüche**

1. Bewegungsdetektor (20), der Folgendes umfasst:

ein Modul zum Detektieren einer Bewegung (26);
eine Zwischenverarbeitungsschaltung (28), die mit einem Ausgang des Moduls gekoppelt ist,
erste Verstärker- bzw. Analog/Digital-Umsetzer-Schaltelemente (28-1) der Zwischenverarbeitungsschaltung (28), die ein Modulausgangssignal von dem Ausgang des Moduls erhalten und zeitweise aktiviert werden, um ein erstes Ausgangssignal zu erzeugen,

zweite Verstärker- bzw. Analog/Digital-Umsetzer-Schaltelemente (28-2) der Zwischenverarbeitungsschaltung (28), die gleichzeitig mit den ersten Verstärker- bzw. Analog/Digital-Umsetzer-Schaltelementen (28-1) das Modulausgangssignal erhalten und zeitweise aktiviert werden, um ein zweites Ausgangssignal zu erzeugen, wobei die zweiten Verstärker- bzw. Analog/Digital-Umsetzer-Schaltelemente (28-2) mit den ersten Verstärker- bzw. Analog/Digital-Umsetzer-Schaltelementen (28-1) im Wesentlichen identisch sind; und

eine Kreuzkorrelationsschaltung (30), um das erste und das zweite Ausgangssignal zu verarbeiten, um ein rauschunterdrücktes Ausgangssignal zu erzeugen, das eine Bewegung anzeigt,

wobei die ersten Verstärker- bzw. Analog/DigitalUmsetzer-Schaltelemente (28-1) und die zweiten Verstärker- bzw. Analog/Digital-Umsetzer-Schaltelemente (28-2) das Modulausgangssignal identisch verarbeiten.

2. Detektor nach Anspruch 1, wobei die ersten Verstärker- bzw. Analog/Digital-Umsetzer-Schaltelemente (28-1) einen ersten Operationsverstärker (30) umfassen, um das Modulausgangssignal zu verstärken, und wobei die zweiten Verstärker- bzw. Analog/Digital-Umsetzer-Schaltelemente (28-2) einen zweiten Operationsverstärker (30) umfassen, um das Modulausgangssignal zu verstärken.

3. Detektor nach Anspruch 1, wobei die Kreuzkorrelationsschaltung einen Digitalsignalprozessor (30) umfasst.

4. Detektor nach Anspruch 1, der ferner Steuerschaltungen umfasst, um wenigstens die Zwischenverarbeitungsschaltungen so zu steuern, dass sie in einem ersten Betriebszustand oder einem zweiten Betriebszustand arbeiten.

5. Detektor nach Anspruch 4, wobei der erste oder der zweite Betriebszustand einen stromlosen Zustand umfasst.

6. Detektor nach Anspruch 4, der ferner schaltbare Leistungszufuhrschaltungen umfasst.

7. Detektor nach Anspruch 1, der ferner ein Gehäuse umfasst, das das Modul, die Zwischenverarbeitungsschaltung und die Kreuzkorrelationsschaltung aufnimmt.

8. Detektor nach Anspruch 7, der ferner Steuerschaltungen umfasst, um wenigstens die Zwischenverarbeitungsschaltung zwischen einem ersten und dem zweiten Betriebszustand zu schalten, wobei der erste oder der zweite Betriebszustand ein stromloser Zustand ist.

9. Detektor nach Anspruch 8, der ferner Übertragungsschaltungen umfasst, die mit den Steuerschaltungen gekoppelt sind, um mit einem entfernten Ort durch ein kabelgebundenes oder ein kabelloses Medium zu kommunizieren.

10. Detektor nach Anspruch 9, der ferner eine Batterie umfasst, die wenigstens mit den Steuerschaltungen gekoppelt ist.

11. Verfahren zum Detektieren einer Bewegung, wobei das Verfahren die folgenden Schritte umfasst:

Erzeugen eines Ausgangssignals, das eine Bewegung anzeigt, durch ein Modul zum Detektieren einer Bewegung (26) ;

Erhalten des Ausgangssignals von dem Modul durch die Zwischenverarbeitungsschaltung (26, 28), die mit einem Ausgang des Moduls gekoppelt ist;

wobei erste Verstärker- bzw. Analog/DigitalUmsetzer-Schaltelemente (28-1) der Zwischenverarbeitungsschaltung (28) das Modulausgangssignal erhalten und zeitweise aktiviert werden, um ein erstes Ausgangssignal zu erzeugen;

wobei zweite Verstärker- bzw. Analog/DigitalUmsetzer-Schaltelemente (28-2) der Zwischenverarbeitungsschaltung (28) gleichzeitig mit den ersten Verstärker- bzw. Analog/Digital-Umsetzer-Schaltelementen (28-1) das Modulausgangssignal erhalten und zeitweise aktiviert werden, um ein zweites Ausgangssignal zu erzeugen, wobei die zweiten Verstärker- bzw. Analog/Digital-Umsetzer-Schaltelemente (28-2) mit den ersten Verstärker- bzw. Analog/Digital-Umsetzer-Schaltelementen (28-1) im Wesentlichen identisch sind, und wobei die ersten Verstärker- bzw. Analog/DigitalUmsetzer-Schaltelemente (28-1) und die zweiten Verstärker- bzw. Analog/Digital-Umsetzer-Schaltelemente (28-2) das Modulausgangssignal identisch verarbeiten;

Verarbeiten des ersten Ausgangssignals und des zweiten Ausgangssignals mit einer Kreuzkorrelationsschaltung (30), um ein rauschunterdrücktes Ausgangssignal zu erzeugen; und

Feststellen des Vorhandenseins der Bewegung auf der Basis des rauschunterdrückten Ausgangssignals.

**Revendications**

1. Détecteur de mouvement (20) comprenant :

   un module de détectoin de mouvement (26) ;
   des circuits de traitement intermédiaire (28) couplés à une sortie du module
   des premiers composants de circuits d'amplificateur/convertisseur analogique-numérique (28-1) des circuits de traitement intermédiaire (28) qui reçoivent un signal de sortie de module de la sortie du module et sont activés par intermittence pour produire un premier signal de sortie,
   des seconds composants de circuits d'amplificateur/convertisseur analogique-numérique (28-2) des circuits de traitement intermédiaire (28) qui, simultanément aux premiers composants de circuits d'amplificateur/convertisseur analogique-numérique (28-1), reçoivent le signal de sortie de module et sont activés par intermittence pour produire un second signal de sortie, dans lequel les seconds composants de circuits d'amplificateur/convertisseur analogique-numérique (28-2) sont sensiblement identiques aux premiers composants de circuits d'amplificateur/convertisseur analogique-numérique (28-1) ; et
   des circuits de corrélation croisée (30) pour traiter les premiers et seconds signaux de sortie afin de produire un signal de sortie indiquant un mouvement à bruit supprimé,
   dans lequel les premiers composants de circuits d'amplificateur/convertisseur analogique-numérique (28-1) et les second composants de circuits d'amplificateur/convertisseur analogique-numérique (28-2) traitent de manière identique le signal de sortie de module.

2. Détecteur selon la revendication 1 dans lequel les premiers composants de circuits d'amplificateur/convertisseur analogique-numérique (28-1) comportent un premier amplificateur opérationnel (30) pour amplifier le signal de sortie de module, et dans lequel les seconds composants de circuits d'amplificateur/convertisseur analogique-numérique comportent un second amplificateur opérationnel (30) pour amplifier le signal de sortie de module.

3. Détecteur selon la revendication 1 dans lequel les circuits de corrélation croisée comportent un processeur de signaux numériques (30).

4. Détecteur selon la revendication 1 comprenant en outre des circuits de commande pour commander au moins les circuits de traitement intermédiaire afin qu'ils fonctionnent dans un d'un premier état opérationnel et d'un second état opérationnel.

5. Détecteur selon la revendication 4 dans lequel un des premier et second états opérationnels comprend un état non alimenté.

6. Détecteur selon la revendication 4 comprenant en outre des circuits d'alimentation électrique commutables.

7. Détecteur selon la revendication 1 comprenant en outre un logement qui renferme le module, les circuits de traitement intermédiaire, et les circuits de corrélation croisée.

8. Détecteur selon la revendication 7 comprenant en outre des circuits de commande pour commuter au moins les circuits de traitement intermédiaire entre des premier et second états opérationnels, dans lequel un des premier et second états opérationnels est un état non alimenté.

9. Détecteur selon la revendication 8 comprenant en outre des circuits de transmission couplés aux circuits de commande pour communiquer avec un emplacement déplacé par un d'un support filaire ou sans fil.

10. Détecteur selon la revendication 9 comprenant en outre une batterie couplée au moins aux circuits de commande.

11. Procédé de détection de mouvement comprenant :

    la génération d'un signal de sortie indicatif d'un mouvement par un module de détection de mouvement (26) ;
    la réception du signal de sortie du module par des circuits de traitement intermédiaire (26, 28) couplés à une sortie du module ;
    la réception par des premiers composants de circuits d'amplificateur/convertisseur analogique-numérique (28-1) des circuits de traitement intermédiaire (28) d'un signal de sortie de module de la sortie du module et leur activation par intermittence pour produire un premier signal de sortie,

la réception par des seconds composants de circuits d'amplificateur/convertisseur analogique-numérique (28-2) des circuits de traitement intermédiaire (28), simultanément aux premiers composants de circuits d'amplificateur/convertisseur analogique-numérique (28-1), du signal de sortie de module et leur activation par intermittence pour produire un second signal de sortie, dans lequel les seconds composants de circuits d'amplificateur/convertisseur analogique-numérique (28-2) sont sensiblement identiques aux premiers composants de circuits d'amplificateur/convertisseur analogique-numérique (28-1) ; et dans lequel les premiers composants de circuits d'amplificateur/convertisseur analogique-numérique (28-1) et les seconds composants de circuits d'amplificateur/convertisseur analogique-numérique (28-2) traitent de manière identique le signal de sortie de module ;

le traitement du premier signal de sortie et du second signal de sortie avec des circuits de corrélation croisée (30) afin de produire un signal de sortie à bruit supprimé ; et

la détermination d'une présence du mouvement en fonction du signal de sortie à bruit supprimé.

(Prior Art)

*FIG. 1*

FIG. 2

EP 3 007 145 B1

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2081545 A
- GB 2401500 A
- CN 103684464 A
- EP 1826732 A